# EUROPÄISCHE PATENTSCHRIFT

(11) **EP 3 242 119 B1**
(45) Veröffentlichungstag und Bekanntmachung des Hinweises auf die Patenterteilung: **27.03.2019**
(21) Anmeldenummer: 17000721.5
(22) Anmeldetag: 27.04.2017
(51) Int. Cl.: G01M 13/02

(54) **VORRICHTUNG ZUR UNTERSUCHUNG DER ZAHNRADTRAGFÄHIGKEIT SOWIE VERFAHREN ZUR UNTERSUCHUNG DER ZAHNRADTRAGFÄHIGKEIT**
DEVICE FOR DETECTING TOOTH WHEEL LOAD CAPACITY, AND METHODS OF STUDYING TOOTH WHEEL LOAD CAPACITY
DISPOSITIF D'ANALYSE DE LA CAPACITÉ PORTANTE DE ROUE DENTÉE ET PROCÉDÉ D'ANALYSE DE LA CAPACITÉ PORTANTE DE ROUE DENTÉE

(30) Priorität: 06.05.2016 DE 102016005868
(43) Veröffentlichungstag der Anmeldung: 08.11.2017
(73) Patentinhaber: Rheinisch-Westfälische Technische Hochschule (RWTH) Aachen, 52062 Aachen (DE)
(72) Erfinder: KONOWALCZYCK, Philip, 52072 Aachen (DE); LÖPENHAUS, Christoph, 52070 Aachen (DE); BRECHER, Christian, 52074 Aachen (DE)
(74) Vertreter: Kohl, Karl-Heinz

(56) Entgegenhaltungen:
- DE-A1- 10 044 879
- US-A- 4 020 678
- US-A1- 2010 158 349

## Beschreibung

Die Erfindung betrifft eine Vorrichtung zur Untersuchung der Zahnradtragfähigkeit nach dem Oberbegriff des Anspruches 1 sowie ein Verfahren zur Untersuchung der Zahnradtragfähigkeit nach dem Oberbegriff des Anspruches 14.

Bei Zahnrädern tritt unter anderem das Problem des Flankenbruches an den Zähnen auf. Gefährdete Verzahnungen sind beispielsweise einsatzgehärtete Verzahnungen mit einem großen Normalmodul (mₙ > 8 mm). Werden die Zahnflanken oberflächenveredelt und mit einer optimierten Modifikation der Mikrogeometrie versehen, wird die kritische Werkstoffanstrengung in das Werkstoffinnere verschoben. In den Zähnen können sich Primär- und Sekundärrisse, gegebenenfalls auch Tertiärrisse bilden. Primärrisse entstehen innerhalb des Zahnes, während Sekundärrisse an der Außenseite der Zahnflanken auftreten. Die Rissinitiierung geht häufig von Fehlstellen im Werkstoffgefüge aus. Solche Flankenbruchschäden treten insbesondere an Großverzahnungen auf.

Weitere bekannte Schadensarten sind neben dem Flankenbruch die Grübchenbildung, Graufleckigkeit, Fressschäden und der Zahnfußbruch. Um die Grübchenbildung, Graufleckigkeit, Fressschäden sowie einen Zahnfußbruch zu untersuchen, sind bereits Vorrichtungen bekannt, mit denen das jeweilige Zahnrad hinsichtlich seiner Tragfähigkeit untersucht werden kann. Hierfür werden beispielsweise Zwei-Wellen-Verspannungsprüfstände oder Zwei-Scheiben-Prüfstände eingesetzt. Mit solchen bekannten Vorrichtungen lassen sich aber Flankenbruchschäden nicht oder nur ungenügend untersuchen. Insbesondere sind diese Vorrichtungen für Großverzahnungen nicht geeignet.

Es sind Vorrichtungen zur Untersuchung von Zahnrädern bekannt (DE 100 44 879 A1; US 2010/0158349 A1; US 4 020 678 A), bei denen ein Druckelement mittels eines Aktors gegen eine Zahnflanke eines Zahnes eines Zahnrades bei der Messung unter Druck angelegt wird.

Der Erfindung liegt die Aufgabe zugrunde, die gattungsgemäße Vorrichtung und das gattungsgemäße Verfahren so auszubilden, dass die Tragfähigkeit von Zahnrädern, insbesondere auch bei Großverzahnungen, kostengünstig und zuverlässig untersucht werden können.

Diese Aufgabe wird bei der gattungsgemäßen Vorrichtung erfindungsgemäß mit den kennzeichnenden Merkmalen des Anspruches 1 und beim gattungsgemäßen Verfahren erfindungsgemäß mit den kennzeichnenden Merkmalen des Anspruches 14 gelöst.

Die erfindungsgemäße Vorrichtung zeichnet sich dadurch aus, dass die Belastung durch zwei relativ zur Zahnflanke positionierte Kraftelemente (Aktoren) aufgebracht wird. Mit den beiden Aktoren werden die beiden Druckelemente gegen dieselbe Zahnflanke des Zahnes gedrückt. Mit den beiden Aktoren ist eine Separation der im Zahneingriff auftretenden Beanspruchungsarten sowie die Korrelation mit äußeren Belastungsformen möglich.

Für die Zahnflankenbruchtragfähigkeit sind insbesondere die Hertzsche (Primär)-Beanspruchung infolge des Kontaktes gekrümmter Körper sowie die Sekundär-Beanspruchung infolge von Biegung, Stauchung und Schub infolge von Querkraft von Bedeutung. Mit der erfindungsgemäßen Vorrichtung wird diese Beanspruchung auf den Zahn mit Hilfe der beiden statisch positionierten Aktoren nachgebildet. Die Kraft-Zeit-Verläufe des Primäraktors und des Sekundäraktors werden aus Beanspruchungsanalysen des Zahneingriffs abgeleitet. Mit der erfindungsgemäßen Vorrichtung ist es möglich, losgelöst von anderen am Zahnrad auftretenden Schadensarten gezielt die Schadensart Zahnflankenbruch zu untersuchen.

Bevorzugt ist der Zahn aus dem Zahnrad herausgetrennt. Darum muss mit der Vorrichtung nicht ein komplettes Zahnrad untersucht werden. Dadurch kann die erfindungsgemäße Vorrichtung hervorragend auch für Großverzahnungen eingesetzt werden, da nicht das gesamte Zahnrad mit der Vorrichtung untersucht werden muss und kein Gegenrad für die Untersuchung nötig ist.

Bei einer vorteilhaften Ausführungsform sind die beiden Aktoren auf einander gegenüberliegenden Seiten der Aufnahme angeordnet. Sie nimmt dadurch nur wenig Raum in Anspruch und ermöglicht eine einfache Befestigung des zu untersuchenden Zahnrades bzw. Zahnes an der Aufnahme.

Um die Druckelemente in die jeweils erforderliche Lage an der Zahnflanke des zu untersuchenden Zahnes in Eingriff zu bringen, ist bei einer bevorzugten Ausführungsform vorgesehen, dass zumindest der eine Aktor, vorzugsweise jedoch beide Aktoren in wenigstens zwei Richtungen relativ zur Aufnahme verstellbar sind.

Eine optimale Positionierung der Druckelemente an der Flanke des zu untersuchenden Zahnes ist möglich, wenn die Aktoren in Höhenrichtung verstellbar und um eine quer zur Höhenrichtung liegende Achse schwenkbar sind. Dadurch lassen sich die Druckelemente in einfacher Weise postionsgenau an der Zahnflanke zur Anlage bringen.

Die beiden Verstellungen der Aktoren können unabhängig voneinander vorgenommen werden, so dass auch ein einfacher und zeitsparender Einstellvorgang gewährleistet ist.

Eine einfache Höhenverstellung der Aktoren ergibt sich, wenn für die Höhenverstellung wenigstens eine Linearführung vorgesehen ist. Dann lassen sich die Aktoren längs der Linearführung einfach in die erforderliche Höhenlage relativ zum zu untersuchenden Zahn verstellen.

Die Linearführung kann durch Schienen, Profilteile und dergleichen gebildet sein.

Unter Höhenrichtung ist bei der erfindungsgemäßen Vorrichtung zu verstehen, dass die Aktoren in Höhenrichtung relativ zur Zahnflanke des zu untersuchenden Zahnes eingestellt werden können. Die Höhenrichtung muss daher nicht zwingend vertikal verlaufen, sondern kann auch unter einem Winkel geneigt zur Vertikalen oder auch horizontal ausgerichtet sein.

Bei einer einfachen Ausführungsform sind die Aktoren jeweils mit wenigstens einem Träger für das Druckelement versehen. Der Träger lässt sich in Richtung auf die Aufnahme bzw. in Richtung auf die Zahnflanke des Zahnes verstellen. Durch Verschieben des Trägers kann das Druckelement mit der erforderlichen Kraft gegen die Zahnflanke gedrückt werden.

Damit der Träger verstellt werden kann, ist er vorteilhaft mit wenigstens einem Antriebsteil des Aktors wirkverbunden.

Bei einer bevorzugten Ausführungsform wird der Primär- und/oder Sekundäraktor durch eine Kolben-Zylinder-Anordnung gebildet. Diese Anordnung kann hydraulisch, pneumatisch, elektrohydraulisch und dergleichen arbeiten.

Der Primär- und/oder der Sekundäraktor können auch elektromotorisch antreibbar ausgebildet sein, so dass der Antriebsteil und damit der Träger mit Hilfe eines Elektromotors bewegt werden können.

Bei einer bevorzugten Ausführungsform weist der Träger des Sekundäraktors zwei mit Abstand nebeneinander liegende Stangenabschnitte auf, deren Abstand voneinander größer ist als die in gleicher Richtung gemessene Breite des zu prüfenden Zahns. Dadurch ist gewährleistet, dass die Stangenabschnitte, welche das Sekundärdruckelement tragen, nicht in Kontakt mit dem zu prüfenden Zahn kommt. Dadurch wird erreicht, dass beide Druckelemente an derselben Zahnflanke des Zahns zur Anlage gebracht werden können, obwohl die beiden Aktoren beiderseits der Aufnahme für den Zahn angeordnet sind.

Bei einer konstruktiv einfachen und zuverlässigen Ausbildung sind die Aktoren mit wenigstens einem Schlitten verbunden, der längs der Linearführung verfahrbar ist.

Hierbei ist von Vorteil, wenn die Aktoren am Schlitten um die Schwenkachse gegenüber dem Schlitten schwenkbar sind.

Damit die Aktoren in jeder Schwenklage während des Prüfvorganges gesichert sind, ist bei einer vorteilhaften Ausführungsform vorgesehen, dass die Aktoren am Schlitten verklemmbar sind. Hierzu können Klemmschrauben vorgesehen sein, mit denen sich die Aktoren bzw. deren Gehäuse am Schlitten festklemmen lassen. Werden solche Klemmschrauben gelockert, kann der jeweilige Aktor um die Schwenkachse gegenüber dem Schlitten in die gewünschte Lage geschwenkt werden, in der der Aktor dann durch Anziehen der Klemmschrauben gehalten wird.

Vorteilhaft werden die Druckelemente über die Länge des Zahns an der Zahnflanke zur Anlage gebracht.

Hierbei sind die Druckelemente vorteilhaft so ausgebildet, dass sie über ihre Länge an der Zahnflanke anliegen. Dementsprechend sind die Druckelemente an die Zahnflankenform angepasst, so dass der Kontakt über die Länge der Druckelemente mit der Zahnflanke sichergestellt ist.

Vorteilhaft sind die Druckelemente so gestaltet, dass sie mit Linienkontakt an der Zahnflanke anliegen.

Beim erfindungsgemäßen Verfahren wird an dieselbe Zahnflanke des Zahnes das Primär- und das Sekundärdruckelement mit Abstand voneinander unter Druck angelegt. Dabei werden die Druckelemente abwechselnd mit Druck für eine bestimmte Zeit an die Zahnflanke angelegt.

Vorteilhaft wird aus dem Zahnrad ein Zahn herausgetrennt und in der Aufnahme befestigt.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine erfindungsgemäße Prüfvorrichtung,
- Fig. 2: eine erfindungsgemäße Prüfvorrichtung in Seitenansicht,
- Fig. 3.: eine Draufsicht auf die erfindungsgemäße Prüfvorrichtung gemäß Fig. 2,
- Fig. 4: in vergrößerter Darstellung und in Seitenansicht einen Primäraktor der erfindungsgemäßen Prüfvorrichtung,
- Fig. 5: eine Draufsicht auf den Primäraktor gemäß Fig. 4,
- Fig. 6: in vergrößerter Darstellung und in Seitenansicht einen Sekundäraktor der erfindungsgemäßen Prüfvorrichtung,
- Fig. 7: eine Draufsicht auf den Sekundäraktor gemäß Fig. 6,
- Fig. 8: in vergrößerter Darstellung und in Seitenansicht eine Zahnaufnahme der erfindungsgemäßen Prüfvorrichtung,
- Fig. 9: eine Draufsicht auf die Zahnaufnahme gemäß Fig. 8.

Mit der nachfolgend beschriebenen Prüfvorrichtung lässt sich die Tragfähigkeit eines Zahnrades hinsichtlich der Schadensart Zahnflankenbruch in konstruktiv einfacher Weise zuverlässig untersuchen. Mit der Prüfvorrichtung können insbesondere Großverzahnungen untersucht werden. Solche Großverzahnungen werden bei Großgetrieben eingesetzt. Derartige Großverzahnungen werden im Automobilbereich, insbesondere bei Getrieben für LKW und für Fahrzeuge, die im Bergbau eingesetzt werden, oder auch bei Windrädern verwendet. Insbesondere kann die Prüfvorrichtung für Zahnräder mit einem Normalmodul mₙ > 8 mm eingesetzt werden. Allerdings ist der Einsatz der Prüfvorrichtung nicht auf solche Großverzahnungen beschränkt, sondern kann auch bei kleineren Verzahnungen eingesetzt werden.

Die Prüfvorrichtung ist vorteilhaft so ausgebildet, dass für die Untersuchung nicht das gesamte Zahnrad, sondern nur ein einzelner Zahn benötigt wird, der in geeigneter Weise aus dem Zahnrad herausgetrennt wird. Es ist dadurch möglich, entsprechend der Zahl der Zähne des Zahnrades eine entsprechende Zahl von Untersuchungen mit der Prüfvorrichtung durchzuführen, wobei jeweils ein Zahn des Zahnrades untersucht wird.

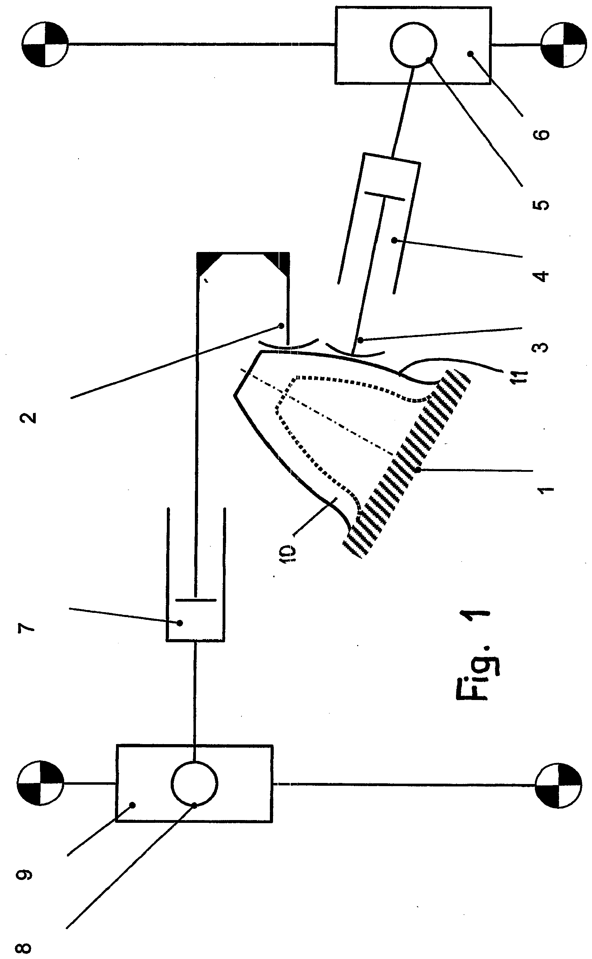

Anhand von Fig. 1 wird der grundsätzliche Aufbau der Prüfvorrichtung und deren Wirkungsweise beschrieben.

Die Prüfvorrichtung hat eine Aufnahme 1, auf der der Prüfling 10 für die Untersuchung aufgespannt wird. Der Prüfling 10 ist ein Zahn eines Zahnrades. Mit ausgezogenen Linien ist ein großes und mit gestrichelten Linien ein kleines Zahnrad 10 dargestellt. Dadurch soll veranschaulicht werden, dass in der Prüfvorrichtung unterschiedlich große Zähne 10 untersucht werden können. Der Zahn 10 wird nahe seinem Kopfbereich an seiner einen Flanke 11 mit wenigstens einem Druckelement 2 belastet. Es erstreckt sich über die gesamte Flankenbreite und liegt unter Linienberührung an ihr an. Das Druckelement 2 wird von einem Sekundäraktor 7 betätigt, mit dem das Druckelement 2 gegen die Zahnflanke 11 gedrückt wird. Der Sekundäraktor 7 ist längs einer Linearachse 9 bewegbar und um eine quer, vorzugsweise senkrecht zur Linearachse 9 liegende Rotationsachse 8 schwenkbar.

Mit dem Druckelement 2 wird auf den Zahn 10 eine Sekundärbelastung ausgeübt, die im vorliegenden Falle eine Biegebeanspruchung ist.

An der Zahnflanke 11 wird ein zweites Druckelement 3 zur Anlage gebracht, das mit Abstand vom Druckelement 2 an der Zahnflanke 11 angreift. Auch dieses Druckelement 3 erstreckt sich vorteilhaft über die Zahnflankenbreite und liegt mit Linienberührung an ihr an. Das Druckelement 3 wird mittels eines Primäraktors 4 betätigt, der längs einer Linearachse 6 verstellbar und um eine quer, vorzugsweise senkrecht zu ihr liegende Rotationsachse 5 drehbar ist. Die Linearachsen 6, 9 liegen parallel zueinander. Auch die Rotationsachsen 5, 8 erstrecken sich parallel zueinander sowie senkrecht zur Linearachse 6, 9.

Mit Hilfe der Achsen 5, 6; 8, 9 lässt sich das Druckelement 2, 3 an jede geeignete Stelle und in jeder geeigneten Orientierung der Zahnflanke 11 bringen, um die erforderliche Zahnflankenbelastung auszuüben. Mit dem Druckelement 3 erfolgt eine primäre Belastung der Zahnflanke 11 bzw. des Zahnes 10. Eine solche Primärbelastung ist eine Hertzsche Beanspruchung. Sie tritt dann auf, wenn zwei gekrümmte Körper einander beispielsweise linienförmig berühren und unter dem Einfluss von Druckkräften Verformungen und Spannungen stehen.

Mittels der beschriebenen Achsen 5, 6; 8, 9 können die Druckelemente 2, 3 in jede für die Untersuchung erforderliche Position an der Zahnflanke 11 gebracht werden. Mit den beiden Aktoren 4, 7 lässt sich der gewünschte Druck auf die Zahnflanke 11 ausüben.

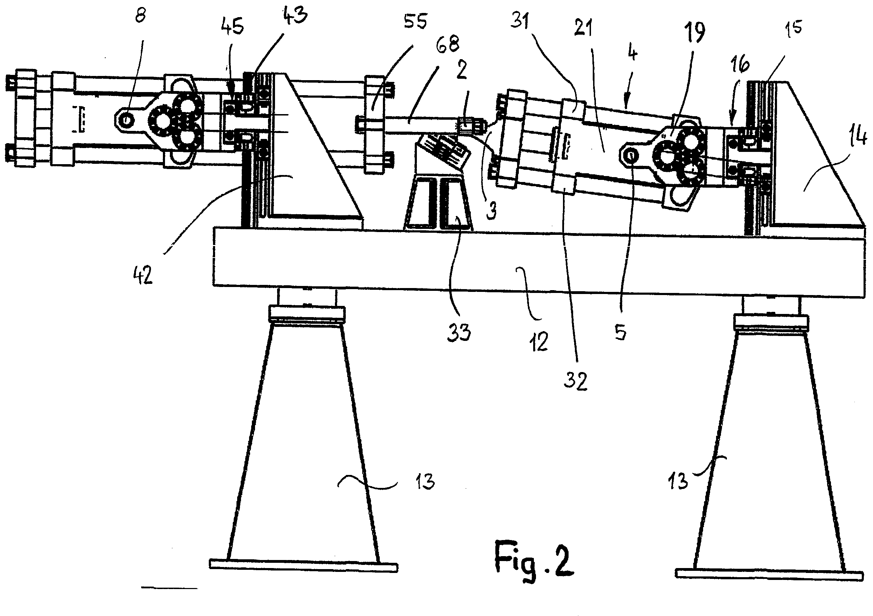

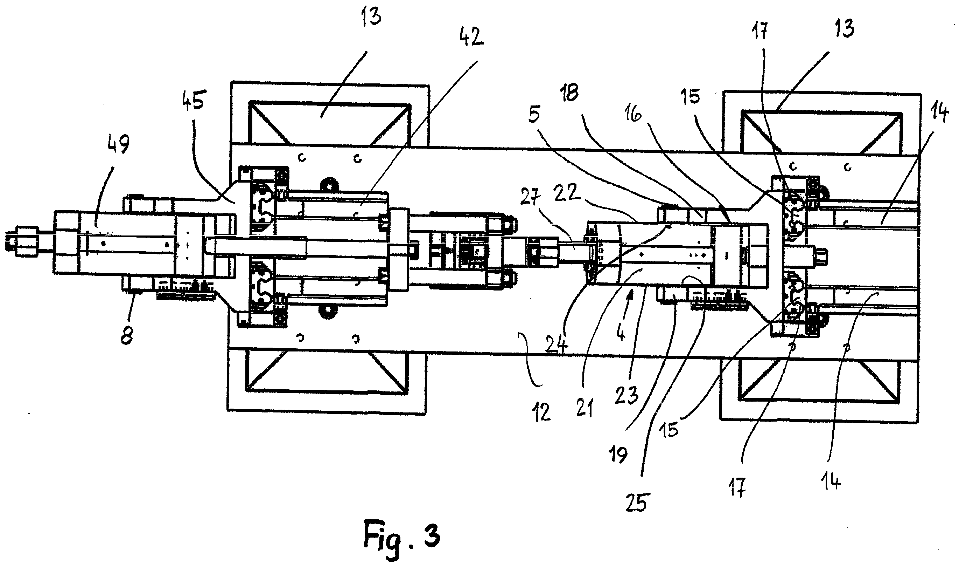

Die Prüfvorrichtung (Fig. 2) hat ein Bett 12, das über Ständer 13 auf dem Untergrund abgestützt wird. Um eine sichere Abstützung auf dem Untergrund zu gewährleisten, stehen die Ständer 13 seitlich über das Bett 12 vor (Fig. 3), das beispielhaft rechteckigen Umriss hat.

Auf dem Bett 12 befindet sich eine Abstützung 14 für wenigstens eine Vertikalführung 15. Im dargestellten Ausführungsbeispiel sind zwei Vertikalführungen 15 mit Abstand nebeneinander vorgesehen (Fig. 3), die sich vom Bett 12 aus senkrecht aufwärts erstrecken und durch Profilteile gebildet sind. Für jede Vertikalführung 15 ist jeweils eine Abstützung 14 vorgesehen, die vorteilhaft durch eine hochkant stehende Platte gebildet ist, an deren einer Stirnseite die Vertikalführung 15 befestigt ist. Die beiden mit Abstand nebeneinander liegenden Vertikalführungen 15 gewährleisten eine zuverlässige, verkantungsfreie Vertikalverschiebung eines Schlittens 16, der mit zwei Führungselementen 17 auf den Vertikalführungen 15 sitzt. Die Führungselemente 17 sind etwa U-förmig ausgebildet und umgreifen die Vertikalführungen 15 seitlich. Die Vertikalführungen 15 bilden die Linearachse 6 für den Primäraktor 4. Er ist um die horizontale Rotationsachse 5 schwenkbar am Schlitten 16 gelagert.

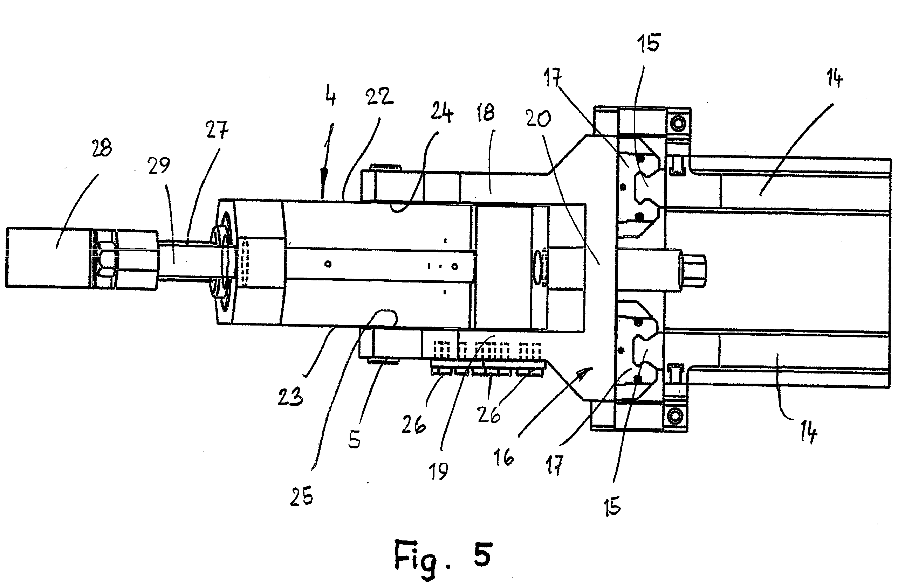

Der Schlitten 16 hat zwei parallel zueinander liegende Arme 18, 19, zwischen die der Primäraktor 4 ragt. Die beiden Arme 18, 19 stehen von einem Quersteg 20 ab, der vorteilhaft einstückig mit den Armen 18, 19 ausgebildet ist. An der von den Armen 18, 19 abgewandten Außenseite des Quersteges 20 sind die beiden Führungselemente 17 befestigt (Fig. 5).

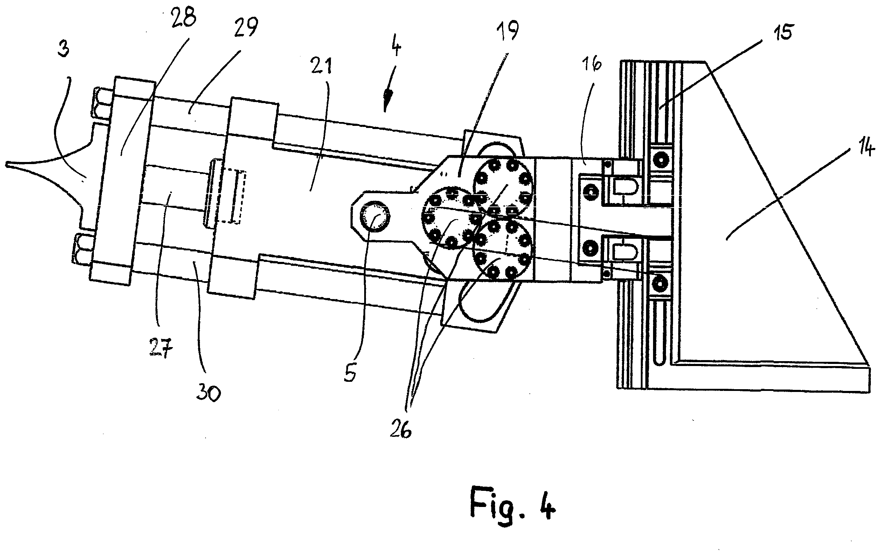

Der Primäraktor 4 hat ein Gehäuse 21, das ebene Seitenflächen 22, 23 aufweist (Fig. 2 und 5), mit denen das Gehäuse 21 an den einander zugewandten ebenen Innenseiten 24, 25 der Arme 18, 19 anliegt. Das Gehäuse 21 wird von der Rotationsachse 5 durchsetzt, deren beide Enden nahe den freien Enden der Arme 18, 19 des Schlittens 16 gelagert sind. Vorteilhaft ist der Bereich der Arme 18, 19, der von der Rotationsachse 5 durchsetzt wird, in der Breite verringert (Fig. 4).

Der Primäraktor 4 kann von Hand um die Rotationsachse 5 in eine gewünschte Lage gedreht werden. Für diese Verdrehbewegung müssen Klemmschrauben 26 gelöst werden, die den Arm 19 des Schlittens 16 durchsetzen und mit deren Hilfe das Gehäuse 21 des Primäraktors 4 zwischen den Armen 18, 19 geklemmt wird. Die Klemmschrauben 26 sind so ausgelegt, dass das Gehäuse 21 fest zwischen den beiden Schlittenarmen 18, 19 verklemmt wird, so dass auch hohe Belastungen bei der Zahnuntersuchung nicht zu einer unerwünschten Verschwenkung des Primäraktors 4 um die horizontale Rotationsachse 5 führen. Die Verstellung des Primäraktors 4 wird im Ausführungsbeispiel von Hand vorgenommen. Es ist grundsätzlich möglich, den Primäraktor 4 auch motorisch zu verstellen und in der eingestellten Lage zu verklemmen.

Damit eine ausreichende Klemmkraft erzielt werden kann, befinden sich die Klemmschrauben 26 nicht im schmalen Endbereich der Schlittenarme 18, 19, sondern im breiteren Armbereich.

Aus dem Gehäuse 21 des Primäraktors 4 ragt eine Kolbenstange 27, mit der ein Träger 28 verschoben werden kann, an dem das Druckelement 3 (Fig. 1) befestigt wird. Damit eine zuverlässige Verschiebung des Trägers 28 gewährleistet ist, ist er mit zwei parallel zueinander liegenden Führungsstangen 29, 30 verbunden, die an der Außenseite des Gehäuses 21 des Primäraktors 4 gelagert sind und sich oberhalb und unterhalb der Kolbenstange 27 befinden.

Die Führung des Trägers 28 kann so gestaltet sein, dass er auf den Führungsstangen 29, 30 mit Hilfe der Kolbenstange 27 verschiebbar ist. Es ist aber auch möglich, die Führungsstangen 29, 30 fest mit dem Träger 28 zu verbinden und die Führungsstangen 29, 30 längs des Gehäuses 21 des Primäraktors 4 zu verschieben. In diesem Falle ist das Gehäuse 21 mit entsprechenden Führungsöffnungen 31, 32 (Fig. 2) versehen, in denen die Führungsstangen 29, 30 beim Verschieben geführt werden.

Die Kolbenstange 27 kann mittels eines Druckmediums pneumatisch, hydraulisch, piezo-mechanisch oder auch elektrisch mittels eines entsprechenden Elektromotors verschoben werden.

Je nach der vorgesehenen Position des Druckelementes 3 an der Zahnflanke des Zahns 10 wird der Primäraktor 4 in Vertikalrichtung längs der Vertikalführungen 15 verschoben und/oder um die horizontale Rotationsachse 5 gedreht. Der Schlitten 16 wird in geeigneter Weise in der eingestellten Höhenposition gesichert.

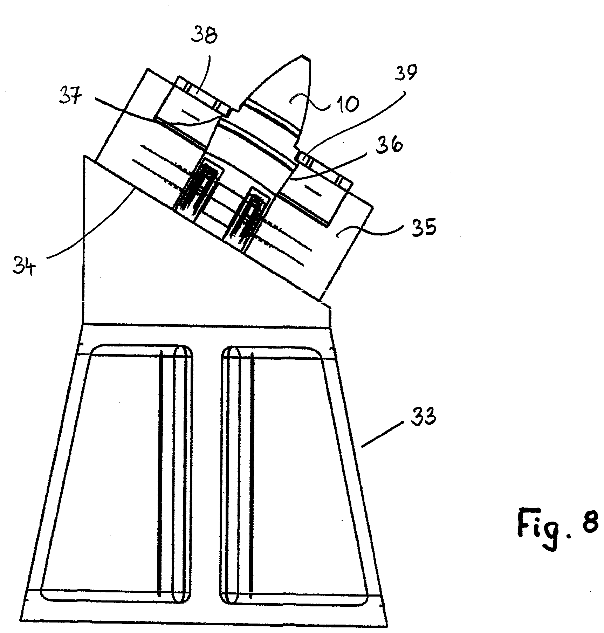

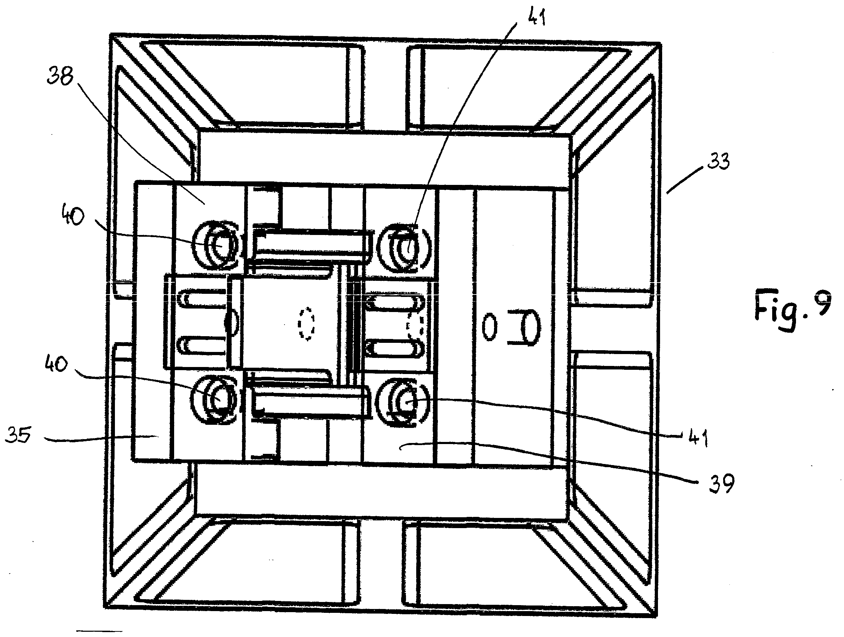

Auf dem Bett 12 ist eine Zahnaufnahme 33 vorgesehen, auf der der zu prüfende Zahn 10 befestigt wird. Die Befestigung des Zahnes 10 auf der Zahnaufnahme 33 kann in jeder geeigneten Form vorgenommen werden. Die Fig. 8 und 9 zeigen nur eine mögliche Ausführungsform einer solchen Zahnaufnahme 33, ohne dass die Gestaltung dieser Zahnaufnahme 33 als beschränkend anzusehen ist. Die Zahnaufnahme 33 ist vorzugsweise lösbar auf dem Bett 12 befestigt und weist stirnseitig eine schräg liegende Auflagefläche 34 für einen Spannblock 35 auf. Er wird auf die Auflagefläche 34 aufgeschraubt und hat eine Aufnahme 36 für den zu untersuchenden Zahn 10. Er wird so aus einem Zahnrad herausgetrennt, dass er einen Absatz 37 aufweist, der von Halteplatten 38, 39 übergriffen wird. Die Halteplatten 38, 39 werden mittels Schrauben 40, 41 gesichert.

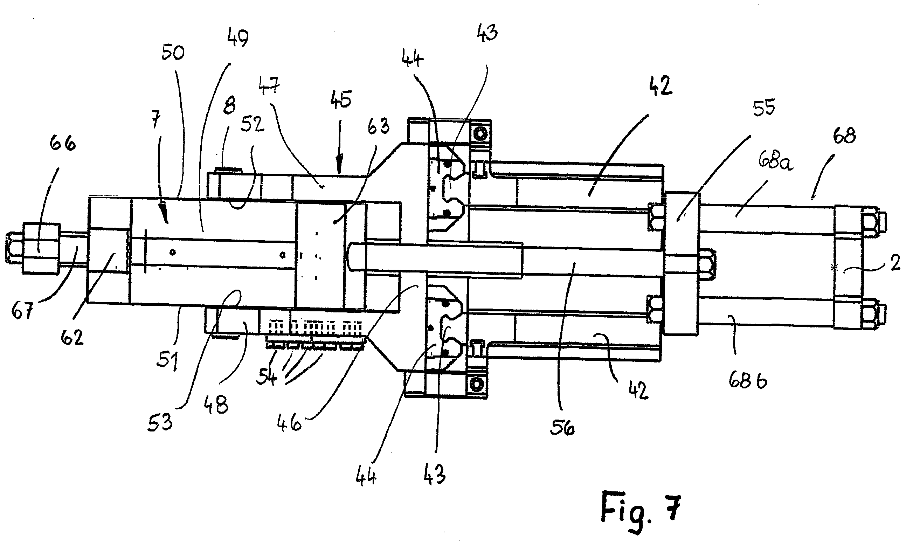

Die Zahnaufnahme 33 befindet sich zwischen der Abstützung 14 und einer Abstützung 42 (Fig. 2). Im Ausführungsbeispiel sind zwei parallel zueinander liegende Abstützungen 42 vorgesehen (Fig. 7), die an ihrer einen Stirnseite jeweils eine Vertikalführung 43 aufweisen. Die beiden Vertikalführungen 43 liegen mit Abstand nebeneinander und werden jeweils durch Profilstäbe gebildet, die sich vom Bett 12 aus senkrecht aufwärts erstrecken. Die beiden Vertikalführungen 43 bilden die Linearachse 9 (Fig. 1) für den Sekundäraktor 7.

Die Vertikalführungen 43 werden von U-förmigen Führungselementen 44 umgriffen (Fig. 7), mit denen ein Schlitten 45 in Vertikalrichtung längs der Vertikalführungen 43 verschiebbar ist.

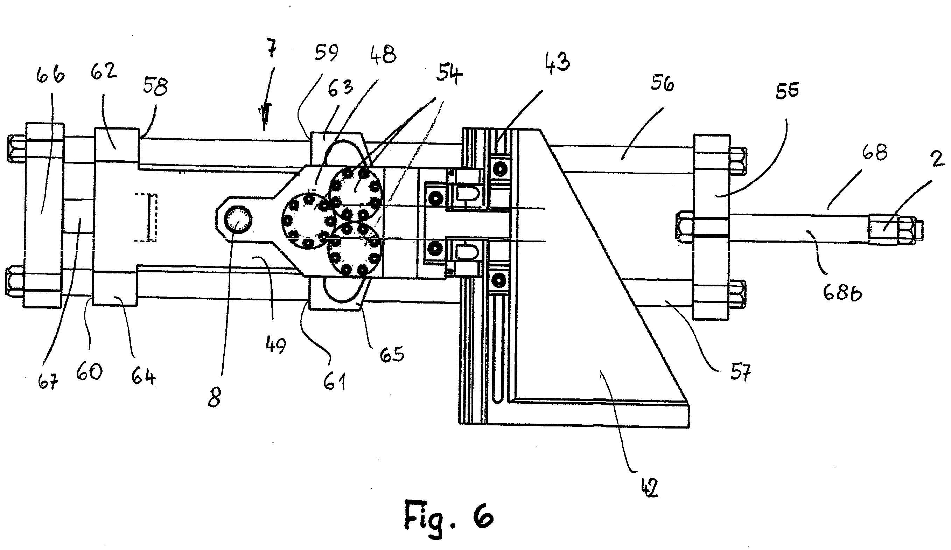

Die Führungselemente 44 sind an einem Quersteg 46 befestigt, der vorteilhaft einstückig mit zwei senkrecht von ihm abstehenden Armen 47, 48 ausgebildet ist. Die Arme erstrecken sich parallel zueinander und sind am freien Ende verjüngt (Fig. 6).

Die Abstützung 42 und der Schlitten 45 sind gleich ausgebildet wie die Abstützung 14 und der Schlitten 16. Wie aus Fig. 2 hervorgeht, sind die beiden Abstützungen 40, 42 in gleicher Richtung auf dem Bett 2 angeordnet. Die beiden Schlitten 16, 45 sind, wie aus Fig. 2 hervorgeht, an der gleichen Seite der Abstützung 14, 42 vorgesehen.

Zwischen die beiden Schlittenarme 47, 48 ragt der Sekundäraktor 7 mit einem Gehäuse 49, das im Bereich zwischen den einander zugewandten Innenseiten 52, 53 der Schlittenarme 47, 48 liegt. Das Gehäuse 49 hat wie das Gehäuse 21 des Primäraktors 4 zwei ebene, zueinander parallele Seitenflächen 50, 51 und wird zwischen den beiden Schlittenarmen 47, 48 festgeklemmt, wie anhand des Gehäuses 21 des Primäraktors 4 beschrieben ist.

Nahe dem freien Ende werden die Schlittenarme 47, 48 von der horizontalen Rotationsachse 8 durchsetzt, die parallel zur Rotationsachse 5 verläuft. Die Rotationsachse 8 durchsetzt das Gehäuse 49 und ist mit ihren Enden in den Schlittenarmen 47, 48 befestigt.

Das Gehäuse 49 kann mittels Klemmschrauben 54 zwischen den Schlittenarmen 47, 48 verklemmt werden, wie anhand des Primäraktors 4 beschrieben worden ist.

Mit dem Sekundäraktor 7 wird ein Träger 55 verschoben, der auf der dem Schlitten 45 gegenüberliegenden Seite der Abstützung 42 vorgesehen ist. Der Träger 55 sitzt auf zwei übereinander liegenden Stangen 56, 57, die sich zwischen den beiden Abstützungen 42 erstrecken (Fig. 7). Aus Fig. 6 ergibt sich, dass die beiden Stangen 56, 57 im Bereich oberhalb und unterhalb des Gehäuses 49 des Sekundäraktors liegen und jeweils durch Führungsöffnungen 58 bis 61 des Gehäuses 49 ragen. Sie sind in Vorsprüngen 62 bis 65 des Gehäuses 49 vorgesehen (Fig. 6). Vorteilhaft liegen die Vorsprünge 61, 63 an der einen Seite des Gehäuses 49 den Vorsprüngen 64, 65 an der anderen Seite gegenüber. Die beiden Vorsprünge 62, 64 befinden sich an dem von den Abstützungen 42 abgewandten Ende des Gehäuses 49. Die beiden Stangen 56, 57 ragen durch die Vorsprünge 62, 64 und sind an den freien Enden durch ein Kupplungsstück 66 miteinander verbunden, das lösbar mit ihnen verbunden ist. Das Kupplungsstück 66 sorgt für eine Synchronbewegung der Stangen 56, 57, wenn sie durch den Sekundäraktor 7 verschoben werden.

Am Kupplungsstück 66 ist das Ende einer Kolbenstange 67 befestigt, die aus dem Gehäuse 49 vorsteht. Wie beim Primäraktor 4 sitzt auch auf der Kolbenstange 67 innerhalb des Gehäuse 49 ein Kolben, der mit einem Druckmedium beaufschlagt wird. Der Sekundäraktor 7 kann pneumatisch, hydraulisch oder piezo-mechanisch betrieben werden. Es ist ferner möglich, den Sekundäraktor 7 so auszubilden, dass er motorisch, beispielsweise mittels eines Elektromotors, betätigt werden kann.

Am Träger 55, der die beiden anderen Enden der Stangen 56, 57 miteinander verbindet und sich im Bereich zwischen den Abstützungen 14, 42 befindet (Fig. 2), ist ein Tragstück 68 vorgesehen, an dem das Druckelement 2 befestigt wird. Das Tragstück 68 wird beispielhaft durch zwei parallel zueinander liegende, in einer Horizontalebene angeordnete Stangenabschnitte 68a, 68b gebildet, die parallel zu den Stangen 56, 57 liegen. Die Stangenabschnitte 68a, 68b erstrecken sich durch den Träger 55, an den sie vorteilhaft angeschraubt sind. Die Stangenabschnitte 68a, 68b erstrecken sich vom Träger 55 aus in Richtung auf den Primäraktor 4. An den freien Enden der Stangenabschnitte 68a, 68b, die auf gleicher Höhe liegen und, in Seitenansicht gemäß Fig. 6 gesehen, im Bereich zwischen den Stangen 56, 57 liegen, ist das Druckelement 2, vorzugsweise lösbar, befestigt.

Der Sekundäraktor 7 kann um die horizontale Rotationsachse 8 gegenüber dem Schlitten 45 sowie den Abstützungen 42 verschwenken. Mit Hilfe des Schlittens 45 kann der Sekundäraktor 7 längs der Vertikalführungen 43 in Höhenrichtung verstellt werden. Dadurch ist es möglich, das Druckelement 2 mit dem zu prüfenden Zahn 10 in Eingriff zu bringen. Der Schlitten 45 lässt sich in der jeweiligen Höhenlage in geeigneter Weise sichern.

Im Prüfzustand greifen beide Druckelemente 2, 3 an derselben Zahnflanke 11 des Zahns 10 an (Fig. 1). Aus diesem Grunde ist das Tragstück 68 so ausgebildet, dass es über die Zahnaufnahme 33 und den Zahn 10 bewegt werden kann. Wie sich aus den Fig. 1 und 2 ergibt, wird dann das Druckelement 2 an der Zahnflanke 11 zur Anlage gebracht, indem der Träger 55 mit dem Tragstück 68 so weit zurückgezogen wird, bis das Druckelement 2 unter der vorgegebenen Druckkraft an der Zahnflanke 11 anliegt. Das andere Druckelement 3 wird durch den Primäraktor 4 in der beschriebenen Weise durch Ausfahren der Kolbenstange 27 gegen die Zahnflanke 11 gedrückt. Da der Träger 28 nicht über die Zahnaufnahme 33 sowie den Zahn 10 hinwegbewegt werden muss, ist keine besondere Formgestaltung des Trägers 28 erforderlich. Das Druckelement 3 kann darum unmittelbar am Träger 28 in geeigneter Weise befestigt werden.

Beide Druckelemente 2, 3 sind lösbar mit dem jeweiligen Träger bzw. Tragstück verbunden, so dass je nach Gestaltung des zu prüfenden Zahnes 10 unterschiedlich ausgebildete Druckelemente einfach am Träger bzw. am Tragstück befestigt werden können.

Das Druckelement 2 des Sekundäraktors 7 wird nahe dem Kopfende des Zahnes 10 gegen die Zahnflanke 11 gedrückt. Das Druckelement 3 des Primäraktors 4 wird mit Abstand unterhalb des Druckelementes 2 an die Zahnflanke 11 gedrückt. Mit ihm wird die Primärbeanspruchung (Hertz) ausgeübt. Mit dem Druckelement 2 des Sekundäraktors 7 erfolgt die Sekundärbeanspruchung in Form einer Biegebeanspruchung.

Die beiden Druckelemente 2, 3 werden abwechselnd für eine Zeit t mit der erforderlichen Kraft gegen die Zahnflanke 11 gedrückt.

Mit der Prüfvorrichtung ist es möglich, die Zähne eines Zahnrades im Hinblick auf einen Flankenbruch zu untersuchen. Da für die Untersuchung nur ein einziger Zahn des Zahnrades benötigt wird, können an einem Zahnrad mehrere Untersuchungen durchgeführt werden, je nach Zahl der Zähne. Die Zähne werden aus dem Zahnrad herausgetrennt, beispielsweise durch ein Erodierverfahren. Die Zähne lassen sich hierbei so heraustrennen, dass sie in der Zahnaufnahme 33 mit den Halteplatten 38, 39 (Fig. 8 und 9) sicher gehalten werden können.

Da die beiden Aktoren 4, 7 in Bezug auf die Zahnaufnahme 33 einander gegenüberliegen, lassen sich die Druckelemente 2, 3 problemlos an derselben Zahnflanke 11 zur Anlage bringen. Da beide Aktoren 4, 7 sowohl in Vertikalrichtung verschiebbar als auch um die horizontale Achse 5, 8 schwenkbar sind, können die Druckelemente 2, 3 zuverlässig am Zahn 10 zur Anlage gebracht werden.

Die Auflagefläche 34 der Zahnaufnahme 33 ist in der bevorzugten Ausführung geneigt angeordnet, wie Fig. 8 zeigt. Diese Gestaltung ermöglicht eine einfache Befestigung des zu prüfenden Zahnes 10. Die Auflagefläche 34 kann durchaus auch horizontal angeordnet sein. Auch dann können die beiden Druckelemente 2, 3 infolge der beschriebenen Gestaltung der beiden Aktoren 4, 7 an derselben Zahnflanke 11 zur Anlage gebracht werden.

Mit der Prüfvorrichtung können Analogieversuche in Bezug auf die Zahnradtragfähigkeit, insbesondere im Hinblick auf Flankenbruchschäden, insbesondere an Großverzahnungen, in einfacher und kostengünstiger Weise untersucht und die Wirkzusammenhänge ermittelt werden. Mit den beiden Aktoren 4, 7 erfolgt eine Separation der im Zahneingriff auftretenden Beanspruchungsarten sowie die Korrelation mit äußeren Belastungsformen. Für die Bruchfähigkeit der Zahnflanke 11 sind insbesondere die Hertzsche (Primär) Beanspruchung infolge des Kontaktes gekrümmter Körper sowie die Sekundärbeanspruchung infolge Biegung, Stauchung und Schub infolge Querkraft von Bedeutung. Bei der Prüfvorrichtung wird diese Beanspruchung der Zahnflanke 11 des Zahnes 11 durch die beiden statisch positionierten Kraftaktoren 4, 7 nachgebildet. Die Kraft-Zeit-Verläufe des Primäraktors 4 und des Sekundäraktors 7 werden aus Beanspruchungsanalysen des Zahneingriffes abgeleitet. Da der Zahn 10 aus einem Zahnrad herausgetrennt wird, kann die Beanspruchbarkeit eines realen Bauteiles abgebildet werden.

Mit der Prüfvorrichtung ist es möglich, eine von anderen Schadensmechanismen losgelöste Untersuchung der Zahnradtragfähigkeit hinsichtlich der Schadensart Zahnflankenbruch zu untersuchen. Dabei können Verzahnungen größerer Abmessungen bei gleichzeitig reduzierten Prüfstands- und Prüfteilekosten untersucht werden.

Grundsätzlich ist es möglich, das komplette Zahnrad an der Zahnaufnahme 33 zu befestigen. Die beiden Druckelemente 2, 3 werden in der beschriebenen Weise gegen dieselbe Zahnflanke 11 eines der Zähne 10 gedrückt. Durch Drehen des Zahnrades können nacheinander die Zähne 10 in die Prüflage gebracht werden, in der die Druckelemente 2, 3 gegen dieselbe Zahnflanke 11 des jeweiligen Zahnes 10 gedrückt werden. Ein Heraustrennen der Zähne 10 aus dem Zahnrad ist in diesem Fall nicht notwendig.

## Patentansprüche

1. Vorrichtung zur Untersuchung der Zahnradtragfähigkeit, mit wenigstens einer Aufnahme (33) für den Prüfling, der ein Zahn (10) des Zahnrades ist, und mit wenigstens einem Primäraktor (4), der wenigstens ein Primärdruckelement (3) aufweist, das mittels des Primäraktors (4) gegen eine Zahnflanke (11) des Zahns (10) gedrückt wird,
**dadurch gekennzeichnet, dass** die Vorrichtung wenigstens einen Sekundäraktor (7) mit wenigstens einem Sekundärdruckelement (2) aufweist, das mittels des Sekundäraktors (7) gegen dieselbe Zahnflanke (11) des Zahns (10) gedrückt wird wie das Primärdruckelement (3).

2. Vorrichtung nach Anspruch 1,
**dadurch gekennzeichnet, dass** der Zahn (10) ein aus dem Zahnrad herausgetrennter Zahn ist.

3. Vorrichtung nach Anspruch 1 oder 2,
**dadurch gekennzeichnet, dass** die beiden Aktoren (4, 7) auf einander gegenüberliegenden Seiten der Aufnahme (33) angeordnet sind.

4. Vorrichtung nach einem der Ansprüche 1 bis 3,
**dadurch gekennzeichnet, dass** zumindest der eine Aktor (4, 7), vorzugsweise beide Aktoren (4, 7) in wenigstens zwei Richtungen relativ zur Aufnahme (33) verstellbar sind.

5. Vorrichtung nach Anspruch 4,
**dadurch gekennzeichnet, dass** die Aktoren (4, 7) in Höhenrichtung verstellbar und um eine quer zur Höhenrichtung liegende Achse (5, 8) schwenkbar sind.

6. Vorrichtung nach Anspruch 5,
**dadurch gekennzeichnet, dass** für die Aktoren (4, 7) jeweils wenigstens eine Linearführung (15, 43) vorgesehen ist.

7. Vorrichtung nach einem der Ansprüche 1 bis 6,
**dadurch gekennzeichnet, dass** die Aktoren (4, 7) jeweils wenigstens einen Träger (28, 55) für das Druckelement (2, 3) aufweisen, der in Richtung auf die Aufnahme (33) verstellbar ist.

8. Vorrichtung nach Anspruch 7,
**dadurch gekennzeichnet, dass** der Aktor (4, 7) wenigstens einen Antriebsteil (27, 67) aufweist, der mit dem Träger (28, 55) wirkverbunden ist.

9. Vorrichtung nach einem der Ansprüche 1 bis 8,
**dadurch gekennzeichnet, dass** der Aktor (4, 7) eine Kolben-Zylinder-Anordnung ist.

10. Vorrichtung nach einem der Ansprüche 7 bis 9,
**dadurch gekennzeichnet, dass** der Träger (55) des Sekundäraktors (7) zwei mit Abstand nebeneinander liegende Stangenabschnitte (68a, 68b) aufweist, deren Abstand voneinander größer ist als die in gleicher Richtung gemessene Breite des zu prüfenden Zahns (10).

11. Vorrichtung nach einem der Ansprüche 6 bis 10,
**dadurch gekennzeichnet, dass** die Aktoren (4, 7) mit wenigstens einem Schlitten (16, 45) verbunden sind, der längs der Linearführung (15, 43) verfahrbar ist.

12. Vorrichtung nach Anspruch 11,
**dadurch gekennzeichnet, dass** die Aktoren (4, 7) am Schlitten (16, 45) verklemmbar sind.

13. Vorrichtung nach einem der Ansprüche 1 bis 12,
**dadurch gekennzeichnet, dass** die Druckelemente (2, 3) über die Länge des Zahnes (10) an der Zahnflanke (11) zur Anlage anbringbar sind.

14. Verfahren zur Untersuchung der Zahnradtragfähigkeit, insbesondere mit einer Vorrichtung nach einem der Ansprüche 1 bis 13, bei dem an eine Zahnflanke (11) eines Zahnes (10) des Zahnrades ein Primärdruckelement (3) unter Druck angelegt wird,
**dadurch gekennzeichnet, dass** an dieselbe Zahnflanke (11) des Zahns (10) des Zahnrades ein Sekundärdruckelement (2) mit Abstand vom Primärdruckelement (3) unter Druck angelegt wird, wobei abwechselnd die Druckelemente (2, 3) mit Druck für eine Zeit (t) an die Zahnflanke (11) angelegt werden.

15. Verfahren nach Anspruch 14,
**dadurch gekennzeichnet, dass** der Zahn (10) aus dem zu prüfenden Zahnrad herausgetrennt und in einer Aufnahme (33) befestigt wird.

## Claims

1. A device for detecting tooth wheel load capacity, having at least one recording (33) for the test specimen, which is a tooth (10) of the tooth wheel, and having at least one primary actuator (4), which has at least one primary pressure element (3), which is pressed by means of the primary actuator (4) against a tooth flank (11) of the tooth (10),
**characterized in that** the device has at least one secondary actuator (7) having at least one secondary pressure element (2), which is pressed by means of the secondary actuator (7) against the same tooth flank (11) of the tooth (10) as the primary pressure element (3).

2. The device according to Claim 1,
**characterized in that** the tooth (10) is a tooth separated out from the tooth wheel.

3. The device according to Claim 1 or 2,
**characterized in that** the two actuators (4, 7) are arranged on mutually opposite sides of the recording (33).

4. The device according to one of Claims 1 to 3,
**characterized in that** at least the one actuator (4, 7), preferably both actuators (4, 7) are adjustable in at least two directions relatively to the recording (33).

5. The device according to Claim 4,
**characterized in that** the actuators (4, 7) are adjustable in the height direction and pivotable about an axis (5, 8) lying transverse to the height direction.

6. The device according to Claim 5,
**characterized in that** at least one linear guide (15, 43) is provided in each case for the actuators (4, 7).

7. The device according to one of Claims 1 to 6,
**characterized in that** the actuators (4, 7) have at least one support (28, 55) in each case for the pressure element (2, 3), which is adjustable in the direction of the recording (33).

8. The device according to Claim 7,
**characterized in that** the actuator (4, 7) has at least one drive part (27, 67), which is operatively connected to the support (28, 55).

9. The device according to one of Claims 1 to 8,
**characterized in that** the actuator (4, 7) is a piston-cylinder arrangement.

10. The device according to one of Claims 7 to 9,
**characterized in that** the support (55) of the secondary actuator (7) has two rod sections (68a, 68b) lying next to one another with spacing, the spacing from one another of which is greater than the width measured in the same direction of the tooth (10) to be tested.

11. The device according to one of Claims 6 to 10,
**characterized in that** the actuators (4, 7) are connected to at least one carriage (16, 45), which is movable along the linear guide (15, 43).

12. The device according to Claim 11,
**characterized in that** the actuators (4, 7) can be clamped on the carriage (16, 45).

13. The device according to one of Claims 1 to 12,
**characterized in that** the pressure elements (2, 3) can be brought to bear against the tooth flank (11) over the length of the tooth (10).

14. A method for studying tooth wheel load capacity, particularly using a device according to one of Claims 1 to 13, in which a primary pressure element (3) is applied under pressure to a tooth flank (11) of a tooth (10) of the tooth wheel,
**characterized in that** a secondary pressure element (2) is applied under pressure to the same tooth flank (11) of the tooth (10) of the gear, with spacing from the primary pressure element (3), wherein the pressure elements (2, 3) are applied alternately to the tooth flank (11) with pressure for a time (t).

15. The method according to Claim 14,
**characterized in that** the tooth (10) is separated out from the tooth wheel to be tested and fastened in a recording (33) .

## Revendications

1. Dispositif d'analyse de la capacité portante de roue dentée avec au moins un logement (33) pour l'échantillon de contrôle, qui est une dent (10) de la roue dentée et avec au moins un actionneur primaire (4), qui comporte au moins un élément de pression primaire (3) qui est appuyé au moyen de l'actionneur primaire (4) contre un flanc de dent (11) de la dent (10),
**caractérisé en ce que**, le dispositif comporte au moins un actionneur secondaire (7) avec au moins un élément de pression secondaire (2), qui est appuyé au moyen de l'actionneur secondaire (7) contre ce même flanc de dent (11) de la dent (10), comme l'élément de pression primaire (3) .

2. Dispositif selon la revendication 1,
**caractérisé en ce que** la dent (10) est une dent séparée de la roue dentée.

3. Dispositif selon la revendication 1 ou 2,
**caractérisé en ce que** les deux actionneurs (4, 7) sont disposés sur les côtés opposés l'un à l'autre du logement (33) .

4. Dispositif selon l'une quelconque des revendications 1 à 3,
**caractérisé en ce qu'**au moins un actionneur (4, 7), de préférence les deux actionneurs (4, 7), peuvent être réglés dans au moins deux directions par rapport au logement (33).

5. Dispositif selon la revendication 4,
**caractérisé en ce que** les actionneurs (4, 7) peuvent être réglés dans le sens de la hauteur et pivotés autour d'un axe (5, 8) se situant transversalement au sens de la hauteur.

6. Dispositif selon la revendication 5,
**caractérisé en ce qu'**au moins un guidage linéaire (15, 43) est respectivement prévu pour les actionneurs (4, 7).

7. Dispositif selon l'une quelconque des revendications 1 à 6,
**caractérisé en ce que** les actionneurs (4, 7) comportent respectivement au moins un support (28, 55) pour l'élément de pression (2, 3), qui peut être réglé en direction du logement (33).

8. Dispositif selon la revendication 7,
**caractérisé en ce que** l'actionneur (4, 7) comporte au moins une pièce d'entraînement (27, 67) qui est reliée de façon fonctionnelle au support (28, 55).

9. Dispositif selon l'une quelconque des revendications 1 à 8,
**caractérisé en ce que** l'actionneur (4, 7) est un système piston-vérin.

10. Dispositif selon l'une quelconque des revendications 7 à 9,
**caractérisé en ce que** le support (55) de l'actionneur secondaire (7) comporte deux sections de tige situées à distance l'une à côté de l'autre (68a, 68b), dont la distance l'une de l'autre est plus grande que la largeur mesurée dans la même direction de la dent à contrôler (10).

11. Dispositif selon l'une quelconque des revendications 6 à 10,
**caractérisé en ce que** les actionneurs (4, 7) sont reliés à au moins un coulisseau (16, 45) qui peut être déplacé le long du guidage linéaire (15, 43).

12. Dispositif selon la revendication 11,
**caractérisé en ce que** les actionneurs (4, 7) peuvent être serrés sur le coulisseau (16, 45).

13. Dispositif selon l'une quelconque des revendications 1 à 12,
**caractérisé en ce que** les éléments de pression (2, 3) peuvent être montés pour appui sur la longueur de la dent (10) sur le flanc de dent (11).

14. Procédé d'analyse de la capacité portante de roue dentée, notamment avec un dispositif selon l'une quelconque des revendications 1 à 13, pour lequel un élément de pression primaire (3) est appliqué sous pression à un flanc de dent (11) d'une dent (10) de la roue dentée,
**caractérisé en ce qu'**un élément de pression secondaire (2) est appliqué sous pression à ce même flanc de dent (11) de la dent (10) de la roue dentée à distance de l'élément de pression primaire (3), les éléments de pression (2, 3) étant alternativement appliqués avec pression pendant un temps (t) au flanc de dent (11).

15. Procédé selon la revendication 14,
**caractérisé en ce que** la dent (10) est séparée de la roue dentée à contrôler et est fixée dans un logement (33).
